# EUROPEAN PATENT SPECIFICATION

(11) **EP 2 765 337 B1**
(45) Date of publication and mention of the grant of the patent: **16.09.2015**
(21) Application number: 14153684.7
(22) Date of filing: 03.02.2014
(51) Int. Cl.: F16H 63/06, F16H 9/18

(54) **Belt-type electronically-controlled continuously variable transmission and vehicle equipped therewith**
Elektronisch gesteuertes, stufenloses Bandgetriebe und damit ausgestattetes Fahrzeug
Transmission variable continue à commande électronique de type courroie et véhicule équipé de celle-ci

(30) Priority: 06.02.2013 JP 2013021748
(43) Date of publication of application: 13.08.2014
(73) Proprietor: Yamaha Hatsudoki Kabushiki Kaisha, Iwata-shi, Shizuoka 438-8501 (JP)
(72) Inventor: Sasamoto, Shinji, Iwata-shi, Shizuoka 438-8501 (JP)
(74) Representative: Stöckeler, Ferdinand

(56) References cited:
- EP-A2- 1 070 878
- EP-A2- 1 225 371
- GB-A- 1 011 870
- US-A- 4 909 776
- US-A1- 2012 100 944

## Description

### TECHNICAL FIELD

The present invention relates to a belt-type electronically-controlled continuously variable transmission and a vehicle equipped with the belt-type electronically-controlled continuously variable transmission.

### BACKGROUND

A certain type of a motor vehicle equipped with a belt-type continuously variable transmission, in which a movable sheave is dynamically controlled using an actuator, such as a hydraulic cylinder or an electric motor, to highly control a gear ratio of the transmission in accordance with a traveling condition of the vehicle, has been known.

For example, a vehicle continuously variable transmission control device has been disclosed in JP3194641 B. In this vehicle continuously variable transmission control device, a movable collar is rotated, by means of a worm gear mechanism driven by a motor through a reduction gear, and then the movable collar is axially moved by an operation of a quick threading screw which is formed on an inner circumference of the movable collar. Therefore, a movable-side pulley half which is connected to the movable collar to be relatively rotatable and axially non-movable is axially moved, and thus a groove width between drive pulleys is changed.

In addition, a belt-type continuously variable transmission has been disclosed in JP2548258 B. In this belt-type continuously variable transmission, an adjustment retainer is rotated at an axial regular position by rotating a worm which is operated from the outside of a case, and a nut portion of a ball screw device is axially moved. Therefore, a gap between pulleys is adjusted, thereby initial tension of a belt is adjusted.

US 2012/0100944A discloses a belt-type electronically-controlled continuously variable transmission comprising: a housing; a primary pulley having a movable sheave; a secondary pulley having a driven sheave; a belt that is wound between the primary pulley and the secondary pulley; a slider that is provided coaxially with the movable sheave and that is connected so as to be axially-movable and rotationally non-movable with respect to the housing and to be axially non-movable and rotationally movable with respect to the movable sheave; a wheel that is provided coaxially with the movable sheave and screwed to the slider using a thread; a worm wheel; a worm gear of which an axis direction is a tangential direction of the worm wheel and which is screwed to the worm wheel, and an electric motor having the worm gear mounted to an output shaft thereof.

### SUMMARY OF INVENTION

However, it was recognized by the inventors that in a case of the known belt-type electronically-controlled continuously variable transmission in which an electric motor is controlled, such as the transmission disclosed in JP3194641 B, it is difficult to say that a structure or arrangement of a movable-sheave driving mechanism is sufficiently considered. Thus, it can be understood that there is room to reduce the size and the cost of the mechanism by applying a simpler structure.

The invention has been made in consideration of such a view point. An object of the invention is to reduce the size and the cost of a movable-sheave driving mechanism of a belt-type electronically-controlled continuously variable transmission, compared to the mechanism of the related art.

The invention disclosed in this application has various aspects, and summaries of the representative aspects are as follows.
(1) According to the invention, there is provided a belt-type electronically-controlled continuously variable transmission including a housing, a primary pulley having a movable sheave, a secondary pulley having a driven sheave, a belt that is wound between the primary pulley and the secondary pulley, a slider that is provided coaxially with the movable sheave and that is connected so as to be axially-movable and rotationally non-movable with respect to the housing via a spline mechanism which is provided on an inner side of the slider and to be axially non-movable and rotationally movable with respect to the movable sheave, a worm wheel that is provided coaxially with the movable sheave and screwed to the slider using a thread, a worm gear of which an axis direction is a tangential direction of the worm wheel and which is screwed to the worm wheel, and an electric motor having the worm gear mounted to an output shaft thereof.
(2) In the belt-type electronically-controlled continuously variable transmission according to (1), a connection portion that is connected to the movable sheave may be provided on an inner circumferential surface of the slider and a male thread portion that is screwed to the worm wheel may be provided on an outer circumferential surface thereof. Furthermore, a female thread portion to which the male thread portion of the slider is screwed may be provided on an inner circumferential surface of the worm wheel.
(3) The belt-type electronically-controlled continuously variable transmission according to (1) or (2) may further include a rotation detection device which includes a pulsar ring that is attached to the worm wheel and a pickup that is provided to face an outer circumferential surface of the pulsar ring and detect rotation of the pulsar ring.
(4) In the belt-type electronically-controlled continuously variable transmission according to (3), a concave-convex structure may be provided on an outer circumferential edge of the pulsar ring, and at least a part of the concave-convex structure in a circumference direction may be formed non-periodically.
(5) According to another aspect of the invention, there is provided a vehicle equipped with the belt-type electronically-controlled continuously variable transmission according to any one of (1) to (4).
(6) In the vehicle according to (5), the electric motor may be arranged below a horizontal plane including a rotation axis of the movable sheave.
(7) In the vehicle according to (5), the electric motor may be arranged above the horizontal plane including the rotation axis of the movable sheave.
(8) In the vehicle according to (5), the electric motor may be arranged in the vehicle to be located ahead of a vertical plane including the rotation axis of the movable sheave and protrudes to the outside of the housing.
(9) In the vehicle according to any one of (5) to (8), the electric motor may be arranged at a position at which the electric motor and a drive wheel of the vehicle do not overlap when viewed from a side.

According to an aspect of (1) of the invention, a movable-sheave driving mechanism of the belt-type electronically-controlled continuously variable transmission can be further reduced in size and cost, compared to the mechanism of the related art.

According to an aspect of (2) of the invention, the movable-sheave driving mechanism of the belt-type electronically-controlled continuously variable transmission can be further reduced in axial size, compared to the mechanism of the related art.

According to an aspect of (3) of the invention, it is possible to detect a position of the movable sheave using a simple and low-cost configuration.

According to an aspect of (4) of the invention, it is possible to detect an absolute rotation angle of the worm wheel using a simple and low-cost configuration.

According to an aspect of (5) of the invention, the movable-sheave driving mechanism of the vehicle equipped with the belt-type electronically-controlled continuously variable transmission can be further reduced in size and cost, compared to the mechanism of the related art.

According to an aspect of (6) of the invention, it is easy to lubricate the movable-sheave driving mechanism.

According to an aspect of (7) of the invention, it is difficult to contaminate the electric motor.

According to an aspect of (8) of the invention, it is easy to cool the electric motor.

According to an aspect of (9) of the invention, it is possible to prevent the vehicle itself from increasing in width-direction size.

### BRIEF DESCRIPTION OF DRAWINGS

Fig. 1 is a side view of a vehicle equipped with a belt-type electronically-controlled continuously variable transmission according to an embodiment of the invention.
Fig. 2 is a horizontal partial cross-sectional view of a surface including an input shaft of the belt-type electronically-controlled continuously variable transmission.
Fig. 3 is a horizontal partial cross-sectional view of a surface including an output shaft of the belt-type electronically-controlled continuously variable transmission.
Fig. 4 is a partially enlarged cross-sectional view illustrating structures of a movable sheave and a sheave drive mechanism.
Fig. 5 illustrates the sheave drive mechanism when viewed from an axis direction.
Fig. 6 is a view illustrating a positional relationship between a housing, a rear wheel, and the sheave drive mechanism, when viewed from a side.
Fig. 7 is a view illustrating a positional relationship between the housing, the rear wheel, and the sheave drive mechanism, when viewed from a side.
Fig. 8 is a view illustrating a positional relationship between the housing, the rear wheel, and the sheave drive mechanism, when viewed from a side.
Fig. 9 is a view illustrating a positional relationship between the housing, the rear wheel, and the sheave drive mechanism, when viewed from a side.
Fig. 10 is a view illustrating a positional relationship between the housing, the rear wheel, and the sheave drive mechanism, when viewed from a side.
Fig. 11 is a view illustrating a positional relationship between the housing, the rear wheel, and the sheave drive mechanism, when viewed from a side.

### DESCRIPTION OF EMBODIMENTS

Hereinafter, embodiments of the invention will be described with reference to the accompanying drawings.

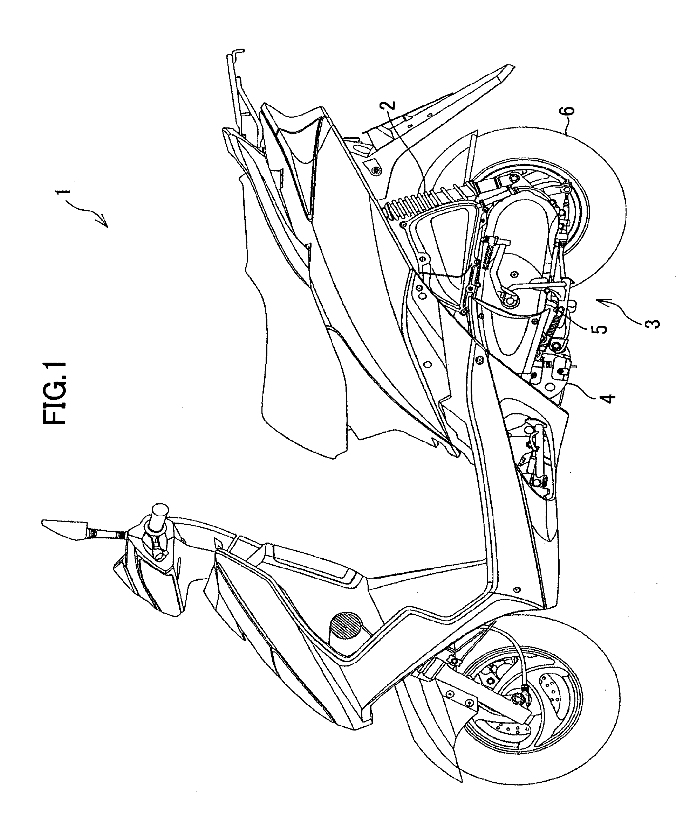

Fig. 1 is a side view of a vehicle 1 equipped with a belt-type electronically-controlled continuously variable transmission 5 according to an embodiment of the invention. In the embodiments, the vehicle 1 is a so-called scooter-type motorcycle. However, a vehicle to which the invention is applied is not limited to a scooter, and any vehicle may be used as long as the vehicle adopts a belt-type electronically-controlled continuously variable transmission according to the invention. Generally, a vehicle to which a belt-type electronically-controlled continuously variable transmission is preferably adopted is a relatively small and lightweight vehicle having simple structure. An example of such a vehicle includes a saddle type vehicle, for example. The saddle type vehicle is a motor vehicle having a saddle astride which an occupant sits. The saddle type vehicle includes a motorcycle, a motor tricycle, a three- or four-wheeled buggy, which is so-called All Terrain Vehicle (ATV), and snow mobile. In addition, the belt-type electronically-controlled continuously variable transmission is usually applied to a so-called underbone type motorcycle, such as a scooter or moped type vehicle, having a swing unit. However, the type of vehicle is not limited thereto. In either case, the vehicle to which the invention is adopted includes a saddle type vehicle, and the saddle type vehicle includes a motorcycle. Further, the motorcycle includes an underbone type one.

The vehicle 1 according to the embodiment includes a swing unit 3 which is rotatably joined to a main body frame of the vehicle 1 and swingably supported, by a suspension 2, with respect to a main body of the vehicle 1. An engine 4, the belt-type electronically-controlled continuously variable transmission 5, and a rear wheel 6 are provided in the swing unit 3, and these members integrally swing as the swing unit 3.

In addition, "the belt-type electronically-controlled continuously variable transmission" described in this specification is a belt-type continuously variable transmission in which a gear ratio is changed in accordance with a command from a certain electronic control equipment, such as an electronic control unit (an ECU). A transmission using a general V-belt is preferable as a belt-type transmission. However, other types of transmissions may also be available.

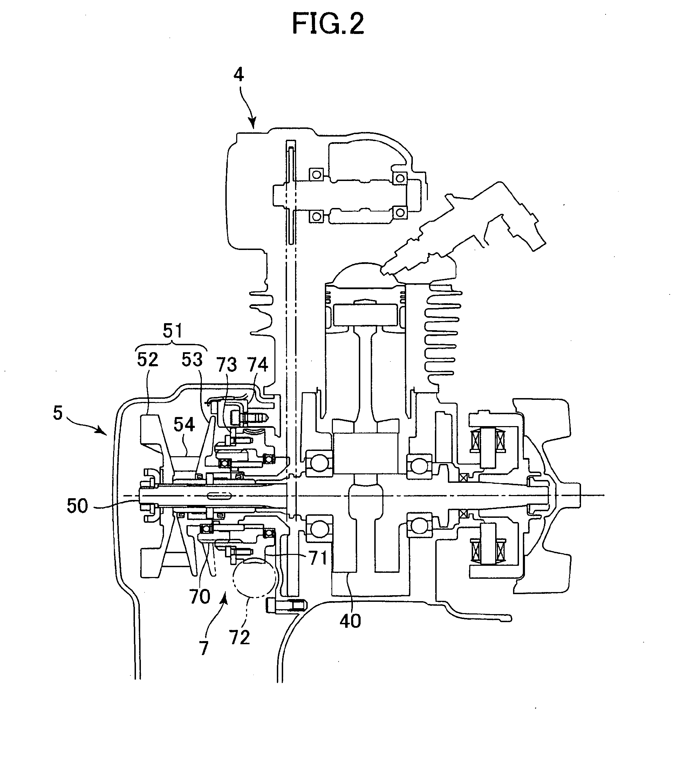

Fig. 2 is a horizontal partial cross-sectional view of a surface including an input shaft 50 of the belt-type electronically-controlled continuously variable transmission 5. Furthermore, a cross-section of the engine 4 is schematically illustrated in the same drawing.

A crank shaft 40 of the engine 4 extends to a left side in terms of drawings and is the input shaft 50 of the belt-type electronically-controlled continuously variable transmission 5, and the crank shaft 40 is integrally directly connected to the input shaft 50. However, the crank shaft 40 and the input shaft 50 may be separately configured and both shafts may be joined via a proper coupling. A primary pulley 51 is mounted on the input shaft 50. The primary pulley 51 is constituted by a fixing sheave 52 and a movable sheave 53, which are a pair of opposing sheaves. The fixing sheave 52 is non-movably fixed to the input shaft 50 and rotates integrally with the input shaft 50. The movable sheave 53 is mounted on the input shaft 50 via a spline mechanism. Rotational movement of the movable sheave 53 is restricted with respect to the input shaft 50, but axial movement thereof is possible. In addition, facing surfaces of the fixing sheave 52 and the movable sheave 53 are inclined such that a gap between the inclined surfaces is gradually increased as the surfaces move radially outward. Further, a V-belt 54 is wound between the inclined surfaces. In the embodiment, the movable sheave 53 is provided in a crank shaft 40 side and the fixing sheave 52 is provided in the opposite side of the crank shaft 40. However, there is no problem even when this arrangement is reversed. Furthermore, in this specification, usage of the terms "pulley" and "sheave" are separated as follows. The "pulley" indicates a wheel itself around which a belt is wound, and the "sheave" indicates a circular plate which constitutes the pulley.

A sheave drive mechanism 7 to axially drive the movable sheave 53 is provided in a space located on a side opposite the inclined surface of the movable sheave 53. Detail of the sheave drive mechanism 7 will be described below. A slider 70, a worm wheel 71, a worm gear 72, a pulsar ring 73, a pickup 74, and the like which constitute the sheave drive mechanism 7 are illustrated in Fig. 2.

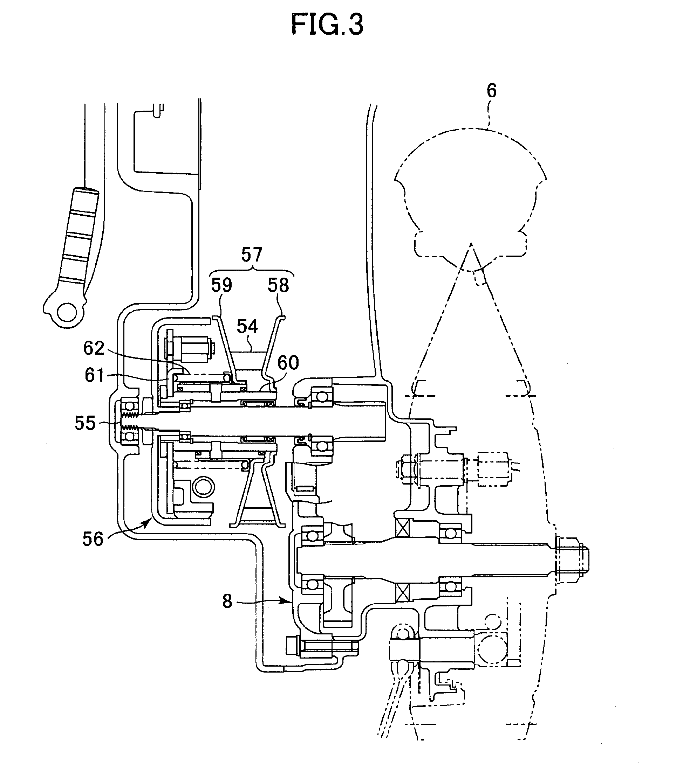

Fig. 3 is a horizontal partial cross-sectional view of a surface including an output shaft 55 of the belt-type electronically-controlled continuously variable transmission 5. Furthermore, cross-sections of the rear wheel 6 and a clutch 56 are schematically illustrated in the same drawing. A secondary pulley 57 is mounted on the output shaft 55. The secondary pulley 57 is constituted by a fixing sheave 58 and a driven sheave 59, which are a pair of opposing sheaves. The fixing sheave 58 is fixed to a sleeve 60 having a cylindrical shape. Furthermore, the sleeve 60 is rotatably supported, via a bearing, to the output shaft 55 which passes through an inner side of the sleeve 60, and thus axial movement of the sleeve 60 is restricted. Accordingly, the fixing sheave 58 is rotatable with respect to the output shaft 55 and is fixed in the axis direction. In addition, the driven sheave 59 is mounted on the sleeve 60 via a spline mechanism. Thus, rotational movement of the driven sheave 59 is restricted with respect to the sleeve 60 and axial movement thereof is possible. In addition, facing surfaces of the fixing sheave 58 and the driven sheave 59 are inclined such that a gap between the inclined surfaces is gradually increased as the surfaces move radially outward. Further, the V-belt 54 is wound between the inclined surfaces. In addition, a compression spring 62 is disposed between a surface opposite the inclined surface of the driven sheave 59, and a pressing plate 61 fixed to an end portion of the sleeve 60. The compression spring 62 presses the driven sheave 59 against the fixing sheave 58. In addition, the clutch 56 is provided in the end portion of the sleeve 60. Thus, when the sleeve 60 rotates at a predetermined rotational speed, the sleeve 60 to which the clutch 56 is connected rotates integrally with the output shaft 55. In other words, when the rotational speed of the secondary pulley 57 is at or above the predetermined rotational speed, the clutch 56 is connected, and thus the secondary pulley 57 and the output shaft 55 rotate at the same rotational speed. In addition, the output shaft 55 and the rear wheel 6 are connected via a proper final reduction mechanism 8.

Basic operations of the belt-type electronically-controlled continuously variable transmission 5 according to the structure described above are as follows. In other words, the gap between the fixing sheave 52 and the movable sheave 53 of the primary pulley 51 is defined in accordance with the positioning of the movable sheave 53 by the sheave drive mechanism 7. In Fig. 2, the farthest position state between the fixing sheave 52 and the movable sheave 53 is illustrated on an upper side of the input shaft 50, and the closest position state between the fixing sheave 52 and the movable sheave 53 is illustrated on a lower side of the input shaft 50. In addition, gyration radius of the V-belt 54 with respect to the primary pulley 51 is defined corresponding to the gap between the fixing sheave 52 and the movable sheave 53.

Furthermore, in the secondary pulley 57 side, the driven sheave 59 is pressed to the fixing sheave 58 by a pressing force of the compression spring 62, regardless of the position of the movable sheave 53 of the primary pulley 51. Thus, the V-belt 54 is wound, without loosening, between the primary pulley 51 and the secondary pulley 57. Therefore, the gap between the fixing sheave 58 and the driven sheave 59 of the secondary pulley 57 is defined corresponding to the position of the movable sheave 53 in the primary pulley 51. In Fig. 3, the farthest position state between the fixing sheave 58 and the driven sheave 59 is illustrated on an upper side of the output shaft 55, and the closest position state between the fixing sheave 58 and the driven sheave 59 is illustrated on a lower side of the output shaft 55. Even in this case, gyration radius of the V-belt 54 with respect to the secondary pulley 57 is defined corresponding to the gap between the fixing sheave 58 and the driven sheave 59.

As described above, the belt-type electronically-controlled continuously variable transmission 5 changes gyration radius of the V-belt 54 with respect to the primary pulley 51 and gyration radius of the V-belt 54 with respect to the secondary pulley 57 by causing the sheave drive mechanism 7 to vary the axial position of the movable sheave 53 to the input shaft 50. As a result, a gear ratio, that is, the rotational speed ratio of the output shaft 55 to the input shaft 50, is continuously controlled.

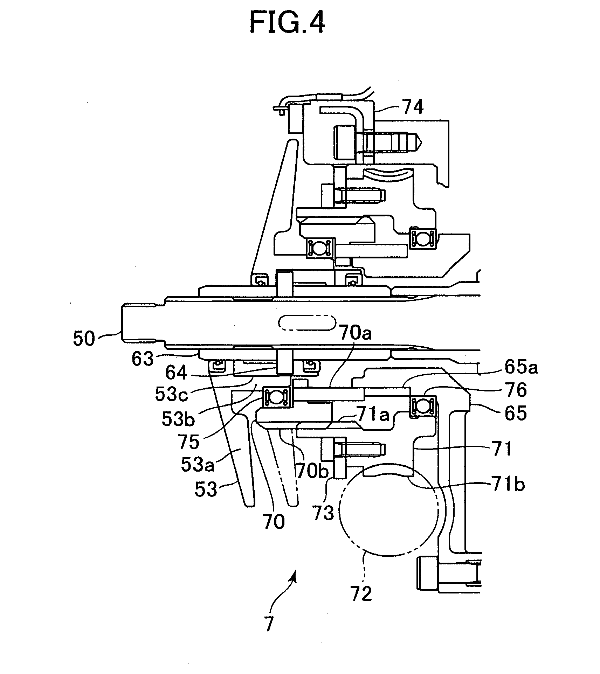

Fig. 4 is a partially enlarged cross-sectional view illustrating structures of the movable sheave 53 and the sheave drive mechanism 7. In Fig. 4, part of Fig. 2 is enlarged. The movable sheave 53 is constituted by a flange portion 53a which has a circular plate shape and has an inclined surface in contact with the V-belt 54 (see Fig. 2) and a cylindrical portion 53b which axially extends from an inner circumferential portion of the flange portion 53a to a side opposite the inclined surface. The cylindrical portion 53b covers a boss 63 to which the input shaft 50 is fitted. A slit 53c extending axially is provided on the cylindrical portion 53b and a pin 64 mounted in the boss 63 is inserted into the slit 53c. Thus, the axial movement of the movable sheave 53 is possible with respect to the boss 63 and the rotational movement thereof is restricted. The boss 63 is axially and rotationally restricted with respect to the input shaft 50. These pin 64 and slit 53c constitute a spline mechanism. However, the specific configuration of the spline mechanism is not particularly limited and configuration other than those in the embodiment, such as a general type in which spline teeth are meshed with spline grooves, or a ball spline type may also be adopted.

The slider 70 is a cylindrical-shaped member which is provided coaxially with the input shaft 50, therefore, the movable sheave 53. The outer diameter of the slider 70 is greater than the outer diameter of the cylindrical portion 53b. The inner circumferential surface of the slider 70 is connected to the outer circumferential surface of the cylindrical portion 53b via a bearing 75 as a connection portion. Thus, the axial movement of the slider 70 is restricted with respect to the movable sheave 53 and the rotational movement thereof is possible. In other words, the slider 70 and the movable sheave 53 move integrally in the axis direction and are relatively freely rotatable in the rotation direction. In addition, a pin 70a is press-fitted to the slider 70 and inserted into a groove 65a which has a semi-cylindrical shape and is provided in a housing 65 of the belt-type electronically-controlled continuously variable transmission 5. The pin 70a is axially slidable on the groove 65a, and thus the axial movement of the slider 70 is possible with respect to the housing 65 and the rotational movement thereof is restricted. The pin 70a and the groove 65a also constitute a spline mechanism. However, the specific configuration of the spline mechanism is not particularly limited to the configurations in the embodiment, as similar to the above-described case. In addition, a male thread portion 70b is formed on the outer circumferential surface of the slider 70. Although a trapezoidal type thread is adopted as a type of the male thread portion 70b in the embodiment, an involute or other type of thread may also be adopted.

The worm wheel 71 is a ring-shaped member which is provided coaxially with the input shaft 50, therefore, the movable sheave 53. The outer diameter of the worm wheel 71 is greater than the outer diameter of the slider 70. The male thread portion 70b formed on the outer circumferential surface of the slider 70 is screwed to a female thread portion 71a formed on the inner circumferential surface of the worm wheel 71. In addition, a helical gear 71b which is meshed with the worm gear 72 is formed on the outer circumferential surface of the worm wheel 71. The worm wheel 71 is mounted on the housing 65 via a bearing 76, and thus the axial movement of the worm wheel 71 is restricted with respect to the housing 65 and the rotational movement thereof is possible. Furthermore, the pulsar ring 73 which is a member having a ring shape is attached to the worm wheel 71. The pulsar ring 73 is a member which rotates integrally with the worm wheel 71. The pulsar ring 73 is provided to detect a rotation angle of the worm wheel 71 using the pickup 74. Further, a pair of the pulsar ring 73 and the pickup 74 constitute a rotation detection device for detecting a rotation angle of the worm wheel 71. This rotation detection device will be described below. However, in the rotation detection device, the pulsar ring 73 and the worm wheel 71 may not necessarily be formed separately, and the worm wheel 71 may integrally have a part functioning as the pulsar ring 73.

The worm gear 72 is directly mounted on an output shaft of an electric motor, as described below. In addition, the pickup 74 is fixed to the housing 65 so as to face an outer circumferential surface of the pulsar ring 73. Furthermore, the pickup 74 can be located at any position as long as the pickup 74 faces the outer circumferential surface of the pulsar ring 73. Thus, the pickup 74 is not necessarily positioned within a cross-section including a rotation axis of the input shaft 50. However, the pickup 74 is illustrated in Fig. 4 to show the positional relationship between the pickup 74 and the pulsar ring 73.

In the structure described above, when the worm gear 72 is rotated by an electric motor (not illustrated in Fig. 4), the worm wheel 71 rotates. In addition, rotation of the slider 70 which is screwed to the worm wheel 71 is restricted by the pin 70a, and thus the rotational movement of the worm wheel 71 is converted to linear movement in an axis direction of the slider 70. Furthermore, the slider 70 and the movable sheave 53 are restricted in the axis direction and move integrally. Thus, when the slider 70 moves, the movable sheave 53 also moves in the axis direction. Accordingly, it is possible to change the gap between the fixing sheave 52 and the movable sheave 53 of the primary pulley 51 (see Fig. 2). Furthermore, the slider 70 and the worm wheel 71 are arranged in a space on a side opposite the inclined surface of the flange portion 53a of the movable sheave 53. In addition, the connection portion, that is, the axial position of the bearing 75, between the slider 70 and the cylindrical portion 53b of the movable sheave 53 is disposed to overlap the axial position of the male thread portion 70b by which the slider 70 is screwed to the worm wheel 71. As a result, the axial length of the sheave drive mechanism 7 is shorter than the axial length of the known mechanism for driving a movable sheave, and thus the entire belt-type electronically-controlled continuously variable transmission 5 is reduced in size.

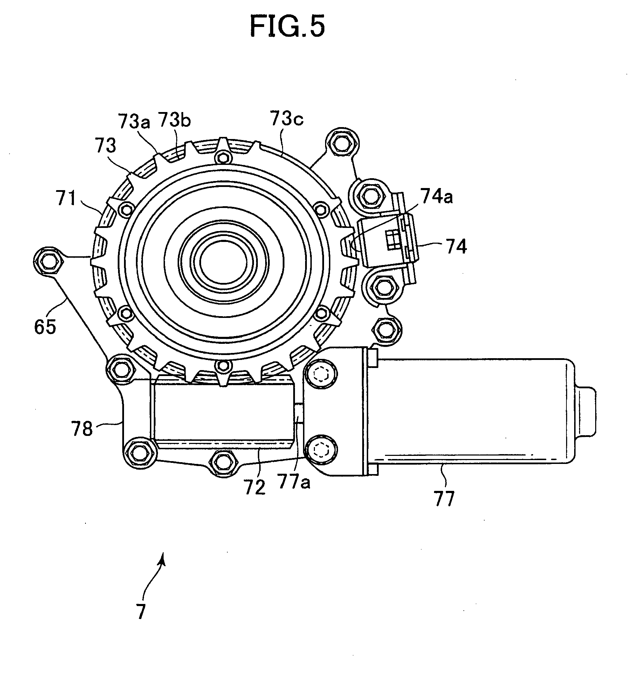

Fig. 5 illustrates the sheave drive mechanism 7 when viewed from an axis direction. Fig. 5 shows Fig. 4 when viewed from a left side, and the flange portion 53a is not illustrated in Fig. 5. The positional relationship between the worm gear 72 and the worm wheel 71 which are screwed to each other is illustrated in Fig. 5. In addition, the position of an electric motor 77 for driving the worm gear 72 is illustrated in Fig. 5. One side of the worm gear 72 is directly mounted on an output shaft of the electric motor 77 and the other side thereof is rotatably supported by a bearing 78. In addition, the worm gear 72 is arranged such that an axis direction thereof is arranged parallel to a tangential direction of the worm wheel 71. Thus, the electric motor 77 is similarly arranged such that an axis direction of the electric motor 77 is arranged parallel to the tangential direction of the worm wheel 71. Accordingly, an output shaft 77a thereof is coaxial with the worm gear 72. Furthermore, the worm gear 72 being "directly" mounted to the electric motor 77 means that a power transmission mechanism, such as a reduction gear, for changing a rotational speed is not interposed between the worm gear 72 and the electric motor 77. Therefore, there is no problem even when the worm gear 72 and the output shaft 77a of the electric motor 77 are connected using a proper flexible coupling.

The number of components which constitute the sheave drive mechanism 7 having a structure described above is smaller than the number of components of the known mechanism for driving a movable sheave. Accordingly, the entire belt-type electronically-controlled continuously variable transmission 5 can be reduced in cost and reduced in the number of components. In addition, it is preferable that the worm gear 72 have a twisting angle smaller than a repose angle. This prevents power transmission from the worm wheel 71 to the worm gear 72, and thus the worm wheel 71 is in a so-called self lock state. Therefore, it is not necessary to install a break in the electric motor 77. Accordingly, a reduction in cost, a reduction in size (a compact size), and electric power saving which is because an electromagnetic brake is not necessary are realized. Furthermore, in a case where the worm wheel 71 is unable to be in a self lock state due to various reasons, a proper brake may be installed so as to prevent the worm wheel 71 from rotating when the electric motor 77 is not driven.

The pulsar ring 73 of the embodiment has a concave-convex portions structure in which a plurality of convex portions 73a and concave portions 73b are periodically provided in an outer circumferential surface thereof, as illustrated in the drawing. In addition, the pulsar ring 73 is formed of a ferromagnetic material such as iron. Thus, when the convex portions 73a pass through a detection surface 74a of the pickup 74, this is detected by a change in a magnetic field which is induced by a coil in the pickup 74. Therefore, a number of passes of the convex portions 73a, which is detected by the pickup 74, is counted, and thus the rotation angle of the pulsar ring 73 is detected. Furthermore, when the electric motor 77 is out of driving, the worm wheel 71 is prevented from rotating by the self-lock phenomenon or a brake, as described above. Accordingly, the rotation of the pulsar ring 73 means that the electric motor 77 is in a driven state. Therefore, a rotation direction of the pulsar ring 73 can be determined by a driving direction of the electric motor 77. In addition, a part in which the concave-convex structure is formed non-periodically is formed on a part of the outer circumferential surface of the pulsar ring 73, in terms of the circumferential direction. In an example illustrated in the drawing, this non-periodic structure is a flat portion 73c in which both the convex portions 73a and the concave portions 73b are not formed. The position of the flat portion 73c can be detected using the fact that a signal detected by the pickup 74 does not change despite the driving of the electric motor 77. An initial position of the worm wheel 71 is detected by detecting the flat portion 73c, and thus it is possible to return the worm wheel 71 to the initial position when power of the vehicle 1 is turned on, for example. In addition, the flat portion 73c is an example of the non-periodic structure and other configurations can be applied. Incidentally, it is preferable that the lead of the thread by which the worm wheel 71 is screwed to the slider 70 be a lead which enables the movable sheave 53 to move over the entire movable range thereof without causing one or more rotations of the worm wheel 71 (see Fig. 4). In this configuration, it is possible to know the movement amount of the movable sheave 53 by detecting, using the pickup 74, the rotation angle of a part of the pulsar ring 73, in which the concave-convex structure is formed periodically.

Furthermore, the pulsar ring 73 of the embodiment is described as a ferromagnetic member in which the physical concave-convex structure is formed on the outer circumference thereof. However, it may be a circular ring of which an outer circumference is periodically magnetized, for example. In this case, the pickup 74 is a pickup which detects the rotation angle of the pulsar ring 73 by detecting a change in a magnetic field using a hall element, for example. As described above, if a rotation detection device using the pulsar ring 73 and the pickup 74 is applied, there is an advantage in that the movement amount of the movable sheave 53 can be detected by using a simple and low-cost structure.

In addition, the electric motor 77, the pickup 74, and the bearing 78 are fixed to the housing 65. The housing 65 illustrated in Fig. 5 is one of components constituting the housing 65 of the belt-type electronically-controlled continuously variable transmission 5. Further, the housing 65 illustrated in Fig. 5 is a part of the components.

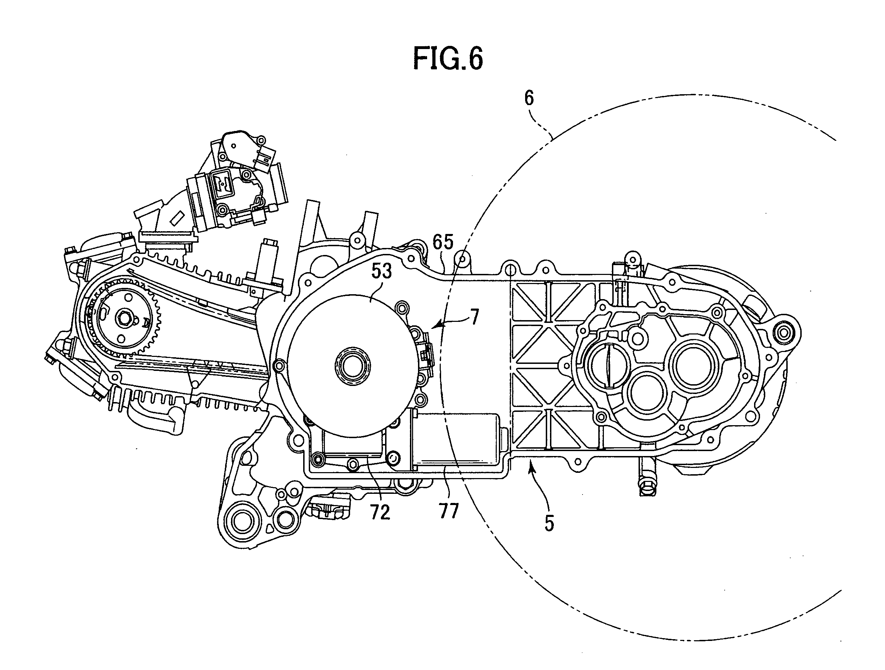

Various arrangements can be applied when accommodating the sheave drive mechanism 7 in the housing 65. Hereinafter, these arrangements will be described with reference to Figs. 6 to 11. Figs. 6 to 11 are views illustrating various positional relationships between the housing 65, the rear wheel 6, and the sheave drive mechanism 7, when viewed from a side. For the reasons of illustrational clarification of the arrangements of the sheave drive mechanism 7, a proper cross-section of the housing 65 is illustrated in Figs. 6 to 11. In addition, for the simple illustration, some members, such as the secondary pulley, or V-belt, are not illustrated.

In an example illustrated in Fig. 6, the electric motor 77 of the sheave drive mechanism 7 is arranged such that the axis line thereof is parallel to a horizontal direction. Furthermore, the electric motor 77 is arranged below a horizontal plane including the rotation axis of the movable sheave 53. In addition, the electric motor 77 is arranged behind a vertical plane including the rotation axis of the movable sheave 53. In this arrangement, the worm gear 72 is located below the belt-type electronically-controlled continuously variable transmission 5, and thus there is an advantage in that it is easy to lubricate the worm gear 72 by providing a proper oil pan or using the housing 65 itself as an oil pan. Furthermore, the electric motor 77 is disposed substantially between the primary pulley and the secondary pulley, and thus the entire belt-type electronically-controlled continuously variable transmission 5 is reduced in size.

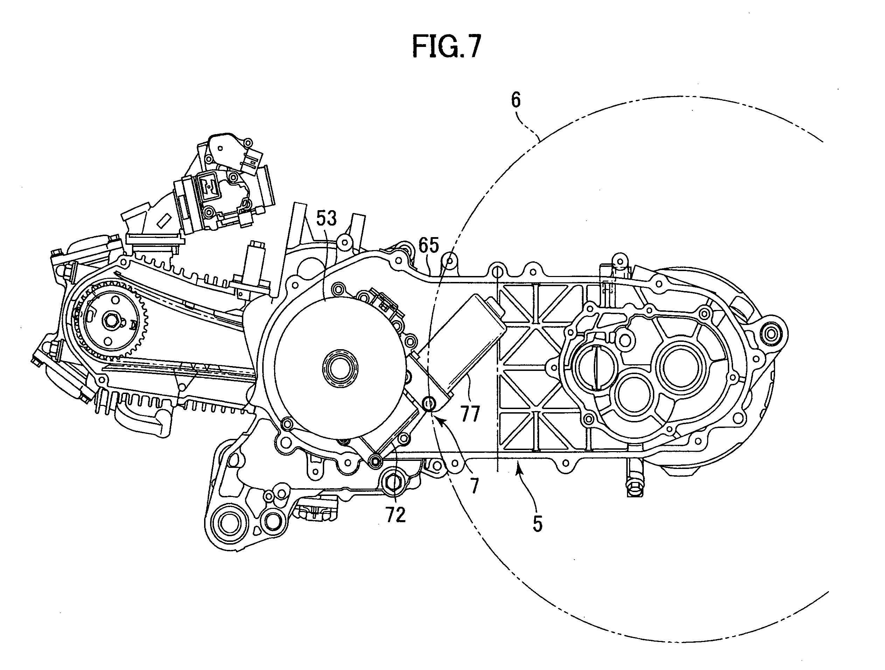

In an example illustrated in Fig. 7, the electric motor 77 of the sheave drive mechanism 7 is arranged such that the axis line thereof is inclined from the horizontal plane at a certain angle. Furthermore, the electric motor 77 is arranged behind a vertical plane including the rotation axis of the movable sheave 53. In the illustrated example, the inclination angle of the axis line of the electric motor 77 is 45 degrees, but it is preferable that the inclination angle thereof is set to be in the range of between 30 degrees and 60 degrees. In this arrangement, both the worm gear 72 and the electric motor 77 are substantially accommodated in a space between the primary pulley and the secondary pulley. Thus, the entire belt-type electronically-controlled continuously variable transmission 5 is extremely reduced in size, and the appearance of the belt-type electronically-controlled continuously variable transmission 5 is substantially the same as the appearance of the belt-type continuously variable transmission in which the sheave drive mechanism 7 is not provided. In addition, the position of the worm gear 72 is low, and thus it is easy to lubricate the worm gear 72.

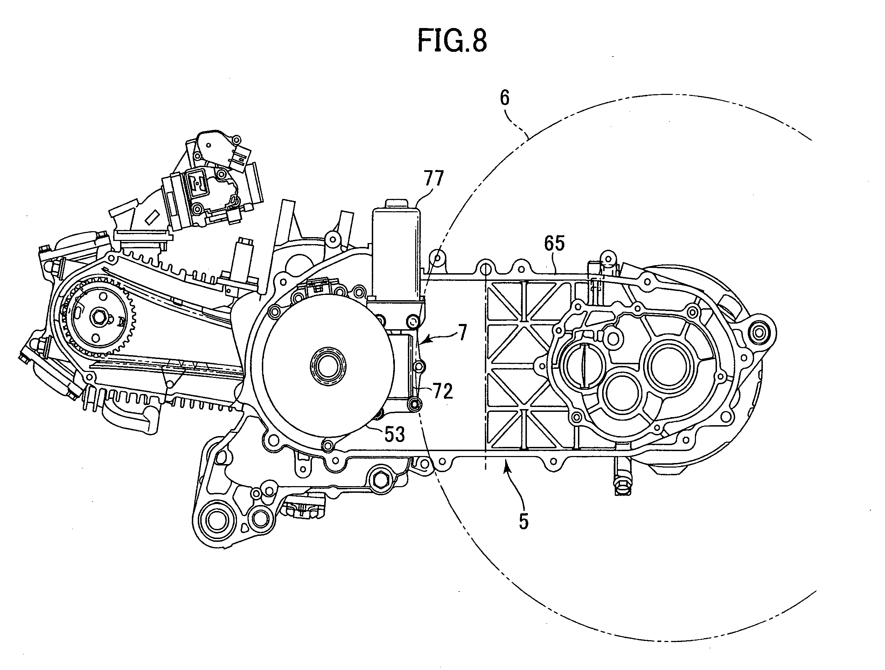

In an example illustrated in Fig. 8, the electric motor 77 of the sheave drive mechanism 7 is arranged such that the axis line thereof is parallel to a vertical direction. Furthermore, the electric motor 77 is arranged above the horizontal plane including the rotation axis of the movable sheave 53. In addition, the electric motor 77 is arranged behind the vertical plane including the rotation axis of the movable sheave 53. In this arrangement, the position of the electric motor 77 is high, and thus it is possible to prevent the electric motor 77 from being contaminated owing to a contact between the electric motor 77 and foreign objects, such as bounced stones during traveling, or a step of a road surface. In the Fig. 8, it is illustrated that a part of the electric motor 77 is exposed from the housing 65. However, there is no problem even when the electric motor 77 is covered with the housing 65. Furthermore, in this arrangement, the electric motor 77 and the rear wheel 6 do not overlap when viewed from a side. In such an arrangement, it is unnecessary to increase the width of the housing 65 in a vehicle width direction to avoid the interference between the electric motor 77 and the rear wheel 6. Thus, the housing 65 itself is reduced in size.

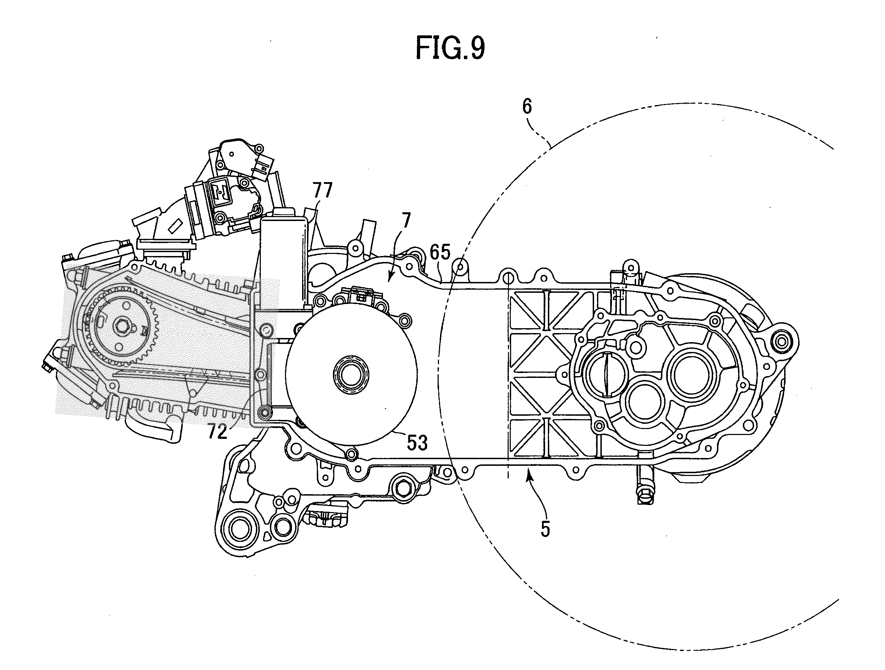

In an example illustrated in Fig. 9, the electric motor 77 of the sheave drive mechanism 7 is arranged such that the axis line thereof is parallel to a vertical direction. Furthermore, the electric motor 77 is arranged above the horizontal plane including the rotation axis of the movable sheave 53. In addition, the electric motor 77 is arranged ahead of the vertical plane including the rotation axis of the movable sheave 53. Furthermore, a part of the electric motor 77 is exposed to protrude to the outside of the housing 65. In this arrangement, wind directly hits the electric motor 77 during traveling, and thus it is advantageous to cool the electric motor 77. Also, it is advantageous to prevent the electric motor 77 from being contaminated, as similar to the example illustrated in Fig. 8. Incidentally, the electric motor 77 protruding to the outside of the housing 65 does not mean that the electric motor 77 is necessarily exposed without being covered with the housing 65. Even when the housing 65 is formed to cover the electric motor 77, the arrangement illustrated in Fig. 9 is still advantageous to cool the electric motor 77. Here, in a case where the housing 65 is a case in which members constituting the belt-type electronically-controlled continuously variable transmission 5, such as the primary pulley, the secondary pulley, the V-belt, the slider, the worm wheel, and the worm gear are accommodated in addition to the electric motor 77, a substantially convex shape enveloping the members is generally selected as a reasonable shape of the housing 65. In addition, technically meaningless concave, convex, and space are avoided as members wasting space and materials. Thus, when considering a space which is defined as the outside of the housing 65, it is reasonable that, as described above, the outside of the housing 65 means an area outside the housing 65, in terms of the reasonable-shaped housing 65 as a case having the members, in addition to the electric motor 77, accommodated therein. Furthermore, in this arrangement, the electric motor 77 and the rear wheel 6 also do not overlap when viewed from a side.

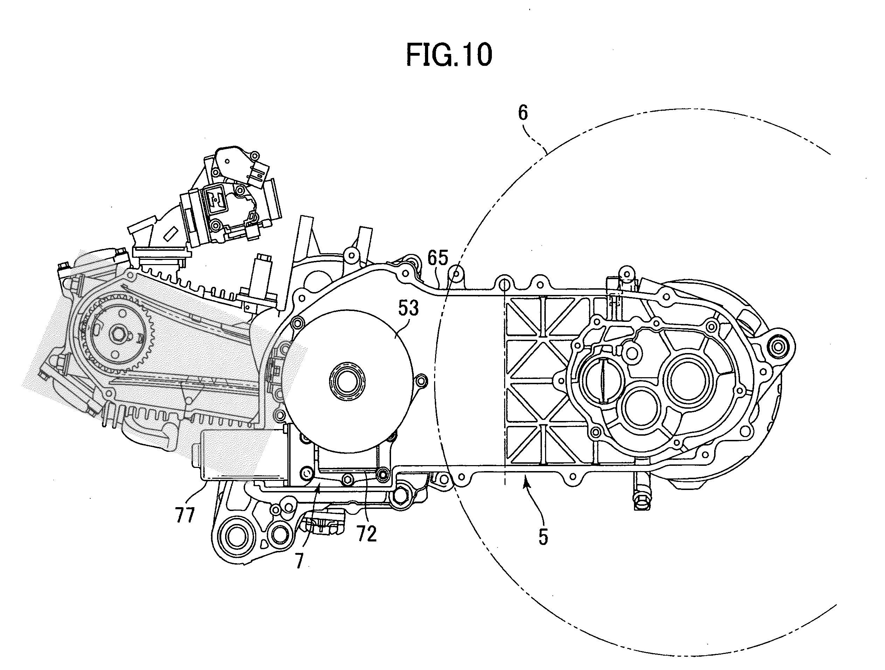

In an example illustrated in Fig. 10, the electric motor 77 of the sheave drive mechanism 7 is arranged such that the axis line thereof is parallel to the horizontal direction. Furthermore, the electric motor 77 is arranged below the horizontal plane including the rotation axis of the movable sheave 53. In addition, the electric motor 77 is arranged ahead of the vertical plane including the rotation axis of the movable sheave 53. Furthermore, a part of the electric motor 77 is exposed to protrude to the outside of the housing 65. In this arrangement, it is advantageous to lubricate the worm gear 72, as similar to the case illustrated in Fig. 6. Also, wind directly hits the electric motor 77 during traveling, and thus it is advantageous to cool the electric motor 77. In addition, in this arrangement, the electric motor 77 and the rear wheel 6 also do not overlap when viewed from a side.

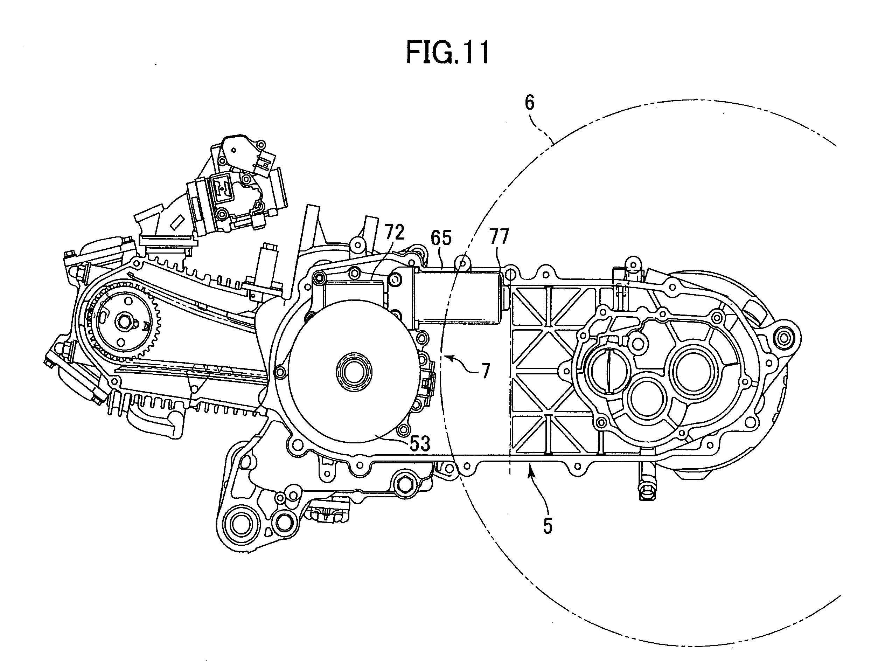

In an example illustrated in Fig. 11, the electric motor 77 of the sheave drive mechanism 7 is arranged such that the axis line thereof is parallel to the horizontal direction. Furthermore, the electric motor 77 is arranged above the horizontal plane including the rotation axis of the movable sheave 53. In addition, the electric motor 77 is arranged behind the vertical plane including the rotation axis of the movable sheave 53. Furthermore, in this arrangement, the electric motor 77 is disposed substantially between the primary pulley and the secondary pulley, as similar to the case illustrated in Fig. 6, and thus the entire belt-type electronically-controlled continuously variable transmission 5 is reduced in size. In addition, it is advantageous to prevent the electric motor 77 from being contaminated, as similar to the case illustrated in Fig. 8.

Hereinbefore, the invention is described with reference to specific embodiments as examples. However, the invention is not limited to the specific configurations of the exemplified specific examples. The specific arrangements, shapes, the number and the like of members in the embodiments are an example. These configurations can be appropriately designed or changed by those skilled in the art while considering various matters, insofar as the same technical effects described above are achieved.

## Claims

1. A belt-type electronically-controlled continuously variable transmission (5) comprising:
a housing (65);
a primary pulley (51) having a movable sheave (53);
a secondary pulley (57) having a driven sheave (59);
a belt (54) that is wound between the primary pulley (51) and the secondary pulley (57);
a slider (70) that is provided coaxially with the movable sheave (53) and that is connected so as to be axially-movable and rotationally non-movable with respect to the housing (65) via a spline mechanism (65a, 70a) which is provided on an inner side of the slider (70) and to be axially non-movable and rotationally movable with respect to the movable sheave (53);
a worm wheel (71) that is provided coaxially with the movable sheave (53) and screwed to the slider (70) using a thread;
a worm gear (72) of which an axis direction is a tangential direction of the worm wheel (71) and which is screwed to the worm wheel (71); and
an electric motor (77) having the worm gear (72) mounted to an output shaft (77a) thereof.

2. The belt-type electronically-controlled continuously variable transmission (5) according to Claim 1,
wherein a connection portion that is connected to the movable sheave (53) is provided on an inner circumferential surface of the slider (70) and a male thread portion (70b) that is screwed to the worm wheel (71) is provided on an outer circumferential surface thereof, and
wherein a female thread portion (71a) to which the slider (70) is screwed is provided on an inner circumferential surface of the worm wheel (71).

3. The belt-type electronically-controlled continuously variable transmission (5) according to Claim 1 or 2, further comprising:
a rotation detection device which includes
a pulsar ring (73) that is attached to the worm wheel (71), and
a pickup (74) that is provided to face an outer circumferential surface of the pulsar ring (73) and detect rotation of the pulsar ring (73).

4. The belt-type electronically-controlled continuously variable transmission (5) according to Claim 3,
wherein a concave-convex structure is provided on an outer circumferential edge of the pulsar ring (73), and at least a part of the concave-convex structure in a circumference direction is formed non-periodically.

5. A vehicle (1) equipped with the belt-type electronically-controlled continuously variable transmission (5) according to any one of Claims 1 to 4.

6. The vehicle (1) according to Claim 5,
wherein the electric motor (77) is arranged below a horizontal plane including a rotation axis of the movable sheave (53).

7. The vehicle (1) according to Claim 5,
wherein the electric motor (77) is arranged above the horizontal plane including the rotation axis of the movable sheave (53).

8. The vehicle (1) according to Claim 5,
wherein the electric motor (77) is arranged in the vehicle (1) to be located ahead of a vertical plane including the rotation axis of the movable sheave (53) and protrudes to the outside of the housing (65).

9. The vehicle (1) according to any one of Claims 5 to 8,
wherein the electric motor (77) is arranged at a position at which the electric motor (77) and a drive wheel (6) of the vehicle (1) do not overlap when viewed from a side.

10. The vehicle (1) according to any one of Claims 1 to 9,
wherein the worm wheel (71) is mounted on the housing (65) via a bearing (76).

## Patentansprüche

1. Ein elektronisch gesteuertes kontinuierlich veränderliches Getriebe vom Riementyp (5), das folgende Merkmale aufweist:
ein Gehäuse (65);
eine primäre Riemenscheibe (51) mit einer bewegbaren Antriebsscheibe (53);
eine sekundäre Riemenscheibe (57) mit einer angetriebenen Antriebsscheibe (59);
einen Riemen (54), der zwischen der primären Riemenscheibe (51) und der sekundären Riemenscheibe (57) gewickelt ist;
einen Schieber (70), der koaxial mit der bewegbaren Antriebsscheibe (53) vorgesehen ist und der verbunden ist, um bezüglich des Gehäuses (65) über einen Keilmechanismus (65a, 70a), der an einer Innenseite des Schiebers (70) vorgesehen ist, axial bewegbar und drehbar nicht bewegbar zu sein, und um bezüglich der bewegbaren Antriebsscheibe (53) axial nicht bewegbar und drehbar bewegbar zu sein;
ein Schneckenrad (71), das koaxial mit der bewegbaren Antriebsscheibe (53) vorgesehen ist und unter Verwendung eines Gewindes an den Schieber (70) geschraubt ist;
ein Schneckengetriebe (72), dessen eine Achsenrichtung eine Tangentialrichtung des Schneckenrads (71) ist, und das an das Schneckenrad (71) geschraubt ist; und
einen elektrischen Motor (77), bei dem das Schneckengetriebe (72) an einer Ausgangswelle (77a) befestigt ist.

2. Das elektronisch gesteuerte kontinuierlich veränderliche Getriebe vom Riementyp (5) gemäß Anspruch 1,
bei dem ein Verbindungsabschnitt, der mit der bewegbaren Antriebsscheibe (53) verbunden ist, auf einer Innenumfangsoberfläche des Schiebers (70) vorgesehen ist, und ein männlicher Gewindeabschnitt (70b), der an das Schneckenrad (71) geschraubt ist, auf einer Außenumfangsoberfläche desselben vorgesehen ist, und
wobei ein weiblicher Gewindeabschnitt (71a), an den der Schieber (70) geschraubt ist, auf einer Innenumfangsoberfläche des Schneckenrads (71) vorgesehen ist.

3. Das elektronisch gesteuerte kontinuierlich veränderliche Getriebe vom Riementyp (5) gemäß Anspruch 1 oder 2, das ferner folgende Merkmale aufweist:
eine Dreherfassungsvorrichtung, die folgende Merkmale umfasst:
einen Pulsar-Ring (73), der an dem Schneckenrad (71) befestigt ist, und
einen Aufnehmer (74), der vorgesehen ist, um einer Außenumfangsoberfläche des Pulsar-Rings (73) zugewandt zu sein und eine Drehung des Pulsar-Rings (73) zu erfassen.

4. Das elektronisch gesteuerte veränderliche Getriebe vom Riementyp (5) gemäß Anspruch 3,
bei dem eine Konkav-Konvex-Struktur an einem Außenumfangsrand des Pulsar-Rings (73) vorgesehen ist, und zumindest ein Teil der Konkav-Konvex-Struktur in einer Umfangsrichtung nicht periodisch gebildet ist.

5. Ein Fahrzeug (1), das mit dem elektronisch gesteuerten kontinuierlich veränderlichen Getriebe vom Riementyp (5) gemäß einem der Ansprüche 1 bis 4 ausgestattet ist.

6. Das Fahrzeug (1) gemäß Anspruch 5,
bei dem der elektrische Motor (77) unter einer horizontalen Ebene angeordnet ist, die eine Drehachse der bewegbaren Antriebsscheibe (53) umfasst.

7. Das Fahrzeug (1) gemäß Anspruch 5,
bei dem der elektrische Motor (77) über der horizontalen Ebene angeordnet ist, die die Drehachse der bewegbaren Antriebsscheibe (53) umfasst.

8. Das Fahrzeug (1) gemäß Anspruch 5,
bei dem der elektrische Motor (77) in dem Fahrzeug (1) angeordnet ist, um vor einer vertikalen Ebene angeordnet zu sein, die die Drehachse der bewegbaren Antriebsscheibe (53) umfasst und zu der Außenseite des Gehäuses (65) vorsteht.

9. Das Fahrzeug (1) gemäß einem der Ansprüche 5 bis 8, bei dem der elektrische Motor (77) an einer Position angeordnet ist, an der der elektrische Motor (77) und ein Antriebsrad (6) des Fahrzeugs (1) von einer Seite aus gesehen nicht überlappen.

10. Das Fahrzeug (1) gemäß einem der Ansprüche 1 bis 9, bei dem das Getrieberad (71) über ein Lager (76) an dem Gehäuse (65) befestigt ist.

## Revendications

1. Transmission variable continue à commande électronique de type courroie (5), comprenant:
un boîtier (65);
une poulie primaire (51) présentant un réa mobile (53);
une poulie secondaire (57) présentant un réa entraîné (59);
une courroie (54) qui est enroulée entre la poulie primaire (51) et la poulie secondaire (57);
un patin (70) qui est prévu de manière coaxiale au réa mobile (53) et qui est connecté de manière à être déplaçable axialement et non déplaçable en rotation par rapport au boîtier (65) par l'intermédiaire d'un mécanisme à cannelures (65a, 70a) qui est prévu d'un côté intérieur du patin (70) et à être non déplaçable axialement et déplaçable en rotation par rapport au réa mobile (53);
une roue hélicoïdale (71) qui est prévue coaxiale au réa mobile (53) et vissé sur le patin (70) à l'aide d'un filet;
un engrenage hélicoïdal (72) dont une direction d'axe est une direction tangentielle de la roue hélicoïdale (71) et qui est vissé sur la roue hélicoïdale (71); et
un moteur électrique (77) présentant l'engrenage hélicoïdal (72) monté sur un arbre de sortie (77a) de ce dernier.

2. Transmission variable continue à commande électronique de type courroie (5) selon la revendication 1,
dans laquelle une partie de connexion qui est connectée au réa mobile (53) est prévue sur une surface circonférentielle intérieure du patin (70) et une partie de filet mâle (70b) qui est vissée sur la roue hélicoïdale (71) est prévue sur une surface circonférentielle extérieure de cette dernière, et
dans laquelle une partie de filet femelle (71a) sur laquelle est vissé le patin (70) est prévue sur une surface circonférentielle intérieure de la roue hélicoïdale (71).

3. Transmission variable continue à commande électronique de type courroie (5) selon la revendication 1 ou 2, comprenant par ailleurs:
un dispositif de détection de rotation qui comporte
une bague Pulsar (73) qui est fixée à la roue hélicoïdale (71), et
un capteur (74) qui est prévu de manière à faire face à une surface circonférentielle extérieure de la bague Pulsar (73) et qui détecte la rotation de la bague Pulsar (73).

4. Transmission variable continue à commande électronique de type courroie (5) selon la revendication 3,
dans laquelle une structure concave-convexe est prévue sur un bord circonférentiel extérieur de la bague Pulsar (73), et au moins une partie de la structure concave-convexe dans une direction circonférentielle est formée de manière non périodique.

5. Véhicule (1) équipé de la transmission variable continue à commande électronique de type courroie (5) selon l'une quelconque des revendications 1 à 4.

6. Véhicule (1) selon la revendication 5,
dans lequel le moteur électrique (77) est disposé au-dessous d'un plan horizontal comportant un axe de rotation du réa mobile (53).

7. Véhicule (1) selon la revendication 5,
dans lequel le moteur électrique (77) est disposé au-dessus du plan horizontal comportant l'axe de rotation du réa mobile (53).

8. Véhicule (1) selon la revendication 5,
dans lequel le moteur électrique (77) est disposé dans le véhicule (1) de manière à se situer à l'avant d'un plan vertical comportant l'axe de rotation du réa mobile (53) et fait saillie à l'extérieur du boîtier (65).

9. Véhicule (1) selon l'une quelconque des revendications 5 à 8, dans lequel le moteur électrique (77) est disposé en une position à laquelle le moteur électrique (77) et une roue d'entraînement (6) du véhicule (1) ne se chevauchent pas, lorsque vu d'un côté.

10. Véhicule (1) selon l'une quelconque des revendications 1 à 9, dans lequel la roue hélicoïdale (71) est montée sur le boîtier (65) par l'intermédiaire d'un roulement (76).
